Europäisches Patentamt

European Patent Office

Office européen des brevets

(11) Veröffentlichungsnummer: **0 418 653 A1**

# EUROPÄISCHE PATENTANMELDUNG

(21) Anmeldenummer: 90117090.2

(51) Int. Cl.5: **G05D 1/02**

(22) Anmeldetag: 05.09.90

(30) Priorität: 21.09.89 DE 3931518

(43) Veröffentlichungstag der Anmeldung:
27.03.91 Patentblatt 91/13

(84) Benannte Vertragsstaaten:
AT CH DE FR GB IT LI NL

(71) Anmelder: FFG FAHRZEUGWERKSTÄTTEN
FALKENRIED GMBH
Falkenried 7-19
W-2000 Hamburg 20(DE)

(72) Erfinder: **Feutlinske, Hilmar, Ing. (grad.)**
**Wentzelstrasse 20a**
**W-2000 Hamburg 60(DE)**
Erfinder: **Materne, Wolfgang, Dipl.-Ing.**
**Volksdorfer Weg 25**
**W-2075 Ammersbek(DE)**

(74) Vertreter: **Glawe, Delfs, Moll & Partner**
**Patentanwälte**
**Postfach 26 01 62 Liebherrstrasse 20**
**W-8000 München 26(DE)**

(54) Verfahren und Anordnung zum Rückwärtsrangieren eines lenkbaren Strassenfahrzeugs.

(57) Verfahren und Anordnung zum Rangieren, insbesondere Rückwärtsrangieren, eines lenkbaren Straßenfahrzeugs aus ungewisser Stellung in eine nach Ort und Richtung vorgegebene Zielposition. Es werden ständig die Winkel ($\gamma$, $\beta$) gemessen, die zwischen der Ziel-Fahrzeug-Verbindungslinie und der Zielpositionsrichtung einerseits und der Fahrzeuglängsrichtung andererseits vorhanden sind. Danach wird ein geeigneter Lenkwinkel eingestellt, beispielsweise nach der Formel $-\alpha = A \cdot \gamma + B \cdot \beta$. Zusätzlich kann die Entfernung zwischen Zielposition und Fahrzeug gemessen werden, und zwar entweder lediglich am Beginn des Rangiervorgangs oder auch ständig. Zur Winkel- und Entfernungsmessung können drahtlose oder mechanische Einrichtungen herangezogen werden, im letzteren Fall zweckmäßigerweise unter Verwendung eines Spannseils, das die Ziel-Fahrzeug-Verbindungslinie abbildet und auf Winkelsensoren wirkt.

FIG. 1

# VERFAHREN UND ANORDNUNG ZUM RÜCKWÄRTSRANGIEREN EINES LENKBAREN STRASSENFAHRZEUGS

Die Erfindung bezieht sich auf ein Verfahren zum Rangieren, insbesondere Rückwärtsrangieren eines lenkbaren Straßenfahrzeugs aus ungewisser Stellung in eine nach Ort und Richtung vorgegebene Zielposition. Sie bezieht sich ferner auf eine Anordnung zur Durchführung dieses Verfahrens.

Häufig ist es notwendig, daß Motorfahrzeuge in Rückwärtsfahrt sehr genau bestimmte Position erreichen, beispielsweise beim Einfahren unter Absetzcontainer, beim Heranfahren an eine Laderampe oder in eine enge Einfahrt oder in Ladeposition an anderen Fahrzeugen, beispielsweise Flugzeugen, oder gegen einen Anhänger zum Ankuppeln. Oft geschieht es dabei, daß die gewollte Endposition nicht erreicht wird und das Mänover wiederholt werden muß oder daß Schäden entstehen.

Der Erfindung liegt die Aufgabe zugrunde, ein Verfahren und eine Anordnung zu schaffen, die ein genaues Manövrieren, insbesondere beim Rückwärtsfahren, erlauben.

Die erfindungsgemäße Lösung besteht darin, daß ständig die Winkel zwischen der Ziel-Fahrzeug-Verbindungslinie und der Zielpositionsrichtung einerseits sowie der Fahrzeuglängsrichtung andererseits gemessen und danach ein geeigneter Lenkwinkel eingestellt wird.

Der Lenkwinkel $\alpha$ kann in sehr einfacher Weise noch der Formel $\alpha = A \cdot \gamma + B \cdot \beta$ bestimmt werden, worin $\gamma$ der Winkel zwischen der ZielFahrzeug-Verbindungslinie und der Zielpositionsrichtung und $\beta$ der Winkel zwischen der Ziel-Fahrzeug-Verbindungslinie und der Fahrzeugslängsrichtung ist und A und B Korrekturfaktoren sind, die die jeweilige Lenkgeometrie berücksichtigen und durch Versuch oder Rechnung leicht zu ermitteln sind. Die Vorzeichen der Winkel müssen so gewählt werden, wie dies weiter unten unter Bezugnahme auf die Zeichnungen erlautert wird. Diese Formel hat den Vorteil, daß eine ständige Entfernungsmessung nicht erforderlich ist, sofern bei Rangierbeginn eine bestimmte Mindestentfernung sichergestellt ist. Eine solche Mindestentfernung kann fest vorgegeben sein. Stattdessen ist es auch möglich, daß die Mindestentfernung jeweils für die gemessenen Winkel automatisch bestimmt wird. Durch ein Signal kann dem Fahrer mitgeteilt werden, wann er die jeweilige Mindestentfernung erreicht hat und daher mit dem automatischen Rangieren beginnen kann.

Jedoch ist es auch möglich, andere Berechnungsformeln der Bestimmung des Lenkwinkels zugrunde zu legen, in denen beispielsweise auch die ständig gemessene Entfernung zur Optimierung berücksichtigt wird. Dies erlaubt auch, bestimmte zusätzliche Anforderungen zu erfüllen, beispielsweise die Einstellung einer gewissen Entfernung vor dem Ziel, bei welcher sich das Fahrzeug schon auf die Zielpositionsrichtung eingestellt haben muß, wenn beispielsweise die Zufahrt zur Zielposition eingeengt ist durch Bauten oder Mahrzeuge, die den Zufahrtsweg einengen.

Für die Winkel- und/oder Entfernungsmessung können mechanische Mittel herangezogen werden. Besonders vorteilhaft kann aber auch die Nutzung elektromagnetischer oder akustischer Strahlung sein.

Eine vorteilhafte mechanische Ausführung umfaßt ein Spannseil zwischen Ziel und Fahrzeug, wobei an beiden Enden des Spannseils Einrichtungen zur Winkelmessung vorgesehen sind. Das Winkelmeßergebnis, das an dem fahrzeugfernen Ende des Spannseils gemessen wird, kann durch eine besondere Einrichtung dem Fahrzeug übermittelt werden. Unter dem Spannseil ist ein Zugorgan zu verstehen, das am Ziel oder am Fahrzeug beispielsweise durch eine Speicherrolle ständig gespannt gehalten wird, so daß es in jeder Situation die Ziel-Fahrzeug-Verbindungslinie wiedergibt. Unter Verwendung eines solchen Seils spielt sich der Vorgang so ab, daß das Fahrzeug zunächst ohne hohe Anforderungen an Genauigkeit in die ehe des Ziels fährt, das Spannseil mit dem Ziel bzw. dem Fahrzeug verbunden wird, das Fahrzeug sodann sich vom Ziel wieder entfernt, um die oben angegebene Mindestentfernung zu erreichen, die durch die Länge des Seils fest vorgegeben sein kann oder entsprechend Entfernungsmessung jeweils ermittelt wird, wonach die automatische Rangiersteuerung eingeschaltet wird. Zweckmäßigerweise wird der Lenkwinkel selbsttätig von dieser Einrichtung eingestellt. Jedoch ist es auch möglich, daß die Einrichtung dem Fahrer lediglich Hinweise dafür gibt, wie er das Lenkrad einzustellen hat.

Es kann als nachteilig empfunden werden, wenn die eine der beiden Winkelmessungen fern vom Fahrzeug stattfindet und deshalb eine Signalübermittlung verlangt. Vorteilhaft ist deshalb eine Anordnung, bei welcher beide Winkel am Fahrzeug gemessen werden können, indem nämlich zwei Spannseile verwendet werden, die mit seitlichem Abstand am Ziel verankert sind. Befindet sich das Fahrzeug seitlich der Zielpositionsrichtung, so kommen die Seile mit einem gewissen Längsversatz am Fahrzeug an, das repräsentativ ist für den am Ziel vorhandenen Winkel zwischen der Ziel-Fahrzeug-Verbindungslinie und der Zielpositionsrichtung.

Wenn man sich eines oder mehrerer Spannseile bedient, kann die Entfernungsmeßeinrichtung vorteilhafterweise mit der Seilspeichereinrichtung gekoppelt werden. Bei Verwendung einer Seiltrommel als Speichereinrichtung ist die Winkelstellung bzw. Umstellungszahl der Trommel ein Maß für die Entfernung.

Besonders zweckmäßig kann die berührungslose Winkel- und/oder Entfernungsmessung sein, für die insbesondere die moderne Lasertechnik geeig nete Komponenten zur Verfügung stellt. Beispielsweise kann der Winkel zwischen der Zielpositionsrichtung und der Ziel-Fahrzeugs-Verbindungslinie festgestellt werden, indem der Laufstreckenunterschied (Laufzeitunterschied, Phasenverschiebung etc.) zwischen zwei von am Ziel seitlich zueinander versetzt angeordneten Sendern ausgehenden Strahlung am Fahrzeug festgestellt wird. Stattdessen ist es auch möglich, lediglich einen Strahlungssender am Ziel zu verwenden, bei dem die ausgehende Strahlung je nach Richtung unterschiedliche Eigenschaften hat, beispielsweise Farbe (Frequenz) oder Modulation. Wenn in diesem Zusammenhang von Sendern oder Strahlern gesprochen wird, wo kann es sich dabei auch um Spiegel handeln, die eine vom Fahrzeug ausgehende Strahlung reflektieren.

Die Erfindung wird im folgenden näher unter Bezugnahme auf die Zeichnung erläutert, die vorteilhafte Ausführungsbeispiele veranschaulicht. Es zeigen:

Fig. 1 ein Motorfahrzeug vor einem damit zu verbindenden Lastträger,

Fig. 2 eine erste Phase des Bewegungsablaufs,

Fig. 3 den Vorgang des Rangierens,

Fig. 4 eine mechanische Winkelabtasteinrichtung,

Fig. 5 die Einrichtung gemäß Fig. 4 in Schaltfunktion,

Fig. 6 eine Spannseilanordnung zwischen Fahrzeug und Ziel,

Fig. 7 ein Detail eines Spannseils,

Fig. 8 eine Abwandlung der Anordnung gemäß Fig. 6,

Fig. 9 einen Bautenzug als Spanneinrichtung,

Fig. 10 den Störeinfluß durch Seitenwind,

Fig. 11 bis 14 verschiedene Doppelseilanordnungen und

Fig. 15 eine Regel- und Steuereinheit.

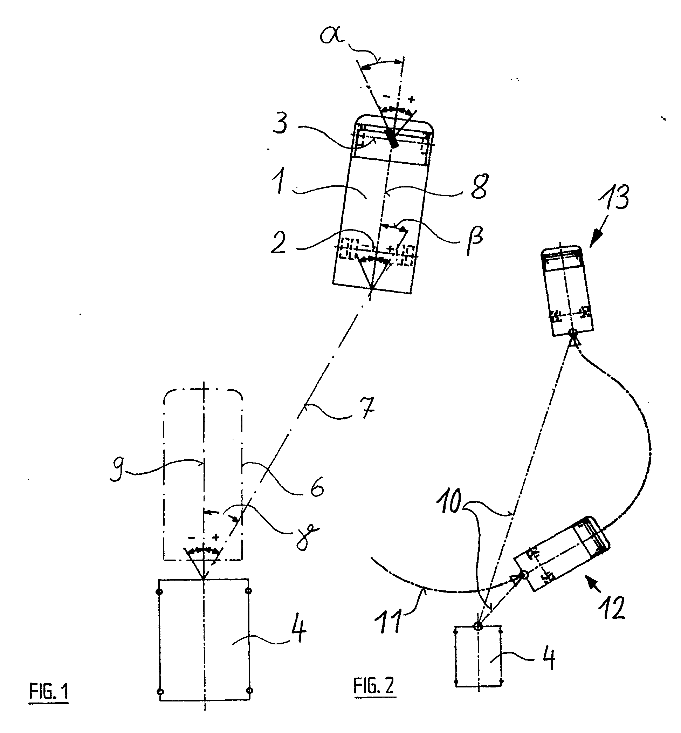

Das in Fig. 1 dargestellte Motorfahrzeug 1 mit fester Achse 2 und lenkbarer Achse 3 soll aus irgendeiner Position rückwärts unter den Lasttrager 4 rangiert werden. Zuvor muß das Fahrzeug 1 in eine Zielposition gelangen, in welcher es in derselben Richtung wie der Lasttrager 4 rückwärts unmittelbar vor diesem steht und die in Fig. 1 bei 6 strichpunktiert angedeutet ist. Das Positionsverhältnis des Fahrzeugs 1 zur Zielposition 6 ist gekennzeichnet durch den Winkel, den die Ziel-Fahrzeug-Verbindungslinie 7 mit der Fahrzeuglängsrichtung 8 einschließt und durch den Winkel $\gamma$ zwischen dieser Linie und der Zielpositionsrichtung 9. Diese Winkel werden in den mit " + " gezeigten Richtung positiv und in der anderen Richtung negativ gemessen. Ferner ist wichtig die Entfernung zwischen dem Fahrzeug 1 und seiner Zielposition 6, die durch die Länge der Ziel-Fahrzeug-Verbindungslinie 7 gegeben ist und der Lenkwinkel $\alpha$ des Fahrzeugs 1.

Wie oben ausgeführt wurde, kann man die Winkel $\beta$ und $\gamma$ sowie Ziel-Fahrzeug-Entfernung berührungsfrei messen. Im folgenden wird jedoch Bezug genommen auf eine mechanische Lösung, bei der die Ziel-Fahrzeug-Verbindungslinie 7 durch ein Spannseil 10 abgebildet wird.

Man hat sich vorzustellen, daß das Spannseil in der Ruhelage sich innerhalb eines Speichers am Ziel oder am Fahrzeug befindet, beispielsweise auf einer Seiltrommel. Bevor der Rangiervorgang beginnt, wird gemäß Fig. 2 das Fahrzeug längs der Fahrlinie 11 in die Nähe des Ziels 4 in die Position 12 fahren, in der das Spannseil 10 angekuppelt werden kann. Dann fährt das Fahrzeug weiter in die Position 13, aus der heraus der Rangiervorgang beginnen kann. Der Fahrer wird sich bemühen, die Position 13 so zu finden, daß sie möglichst günstig zur Zielposition liegt. Für jede Lenkgeometrie läßt sich eine Entfernung angeben, aus der heraus die Zielposition im allgemeinen in einem Zuge erreichbar ist. Auf eine solche Entfernung ist die Länge des Spannseils mindestens bemessen. Wenn es sich bei der Fahrt aus der Position 12 in die Position 13 erstreckt und sich seiner Maximalspannweite nähert, kann dem Fahrer ein Signal gegeben werden, daß er die vorgegebene Entfernung von der Zielposition erreicht hat.

Stattdessen ist es auch möglich, den Rechner des Fahrzeugs so auszubilden, daß er (ggf. auch schon vor der genannten Entfernung) ein Signal dann abgibt, wenn das Fahrzeug irgend eine Position erreicht hat, aus der heraus die Zielposition in einem Zuge erreichbar ist.

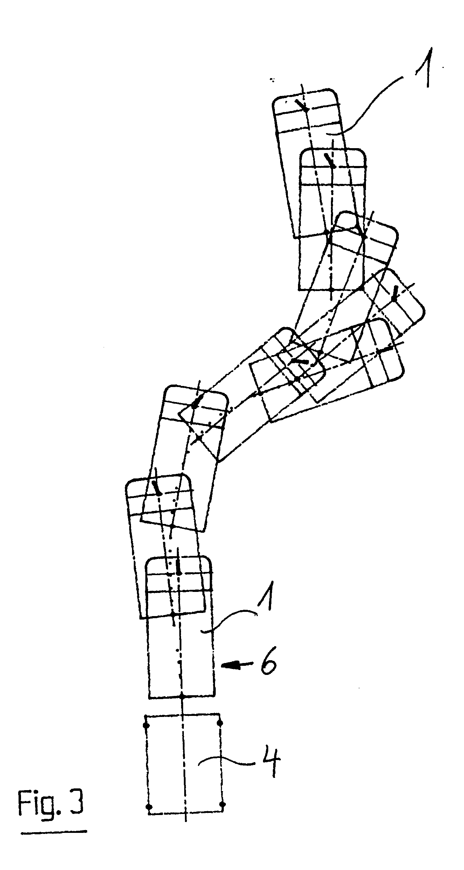

Fig. 3 veranschaulicht einen typischen Rangiervorgang, der sich gemäß Einstellung des Lenkwinkels $\alpha$ nach der Formel

$$\alpha + B + \gamma = 0$$

vollzieht. Den einzelnen Positionen des Vorgangs, die in der Zeichnung die Ziffern 1 bis 10 tragen, sind dabei beispielsweise die folgenden Winkelwerte zugeordnet:

| Pos. | $\gamma$ | + | $\beta$ | = | $-\alpha$ |
|------|----------|---|---------|---|-----------|
| 1 | +20 | | +20 | | -40 |
| 2 | +20 | | ~ 0 | | -20 |
| 3 | +20 | | -10 | | -10 |
| 4 | +18 | | -18 | | ~ 0 |
| 5 | +10 | | -20 | | +10 |
| 6 | + 3 | | -18 | | +15 |
| 7 | ~ 0 | | -10 | | +10 |
| 8 | - 2 | | - 8 | | +10 |
| 9 | - 2 | | + 3 | | - 1 |
| 10 | ~ 0 | | ~ 0 | | ~ 0 |

Voraussetzung für diese Funktion ist, daß das Fahrzeug 1 mindestens eine Lenkachse besitzt und ein zusätzliches Lenkgetriebe für die automatische Lengbetätigung vorgesehen ist, falls man sich nicht mit optischer Leitanzeige für den Fahrer begnügt.

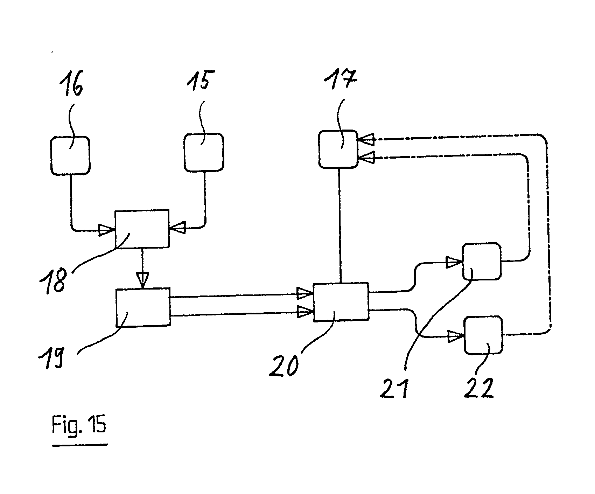

Ferner muß ein Sensor 15 zur Messung des Winkels $\beta$, ein Sensor 16 zur Messung des Winkels $\gamma$ sowie ein Sensor 17 zur Messung des Lenkwinkels vorhanden sein. Schließlich ist eine Regel- und Steuereinheit vorgesehen, die im allgemeinen als elektronischer Rechner ausgebildet ist und gemäß Fig. 15 einen Addierer 18 für die Addition der von den Sensoren 15 und 16 kommenden Winkelwerte, einen Sollwertbildner 19 zur Bildung des Vorgabewerts für den Lenkwinkel, einen Vergleicher 20 zum Vergleich des Vorgabewinkels mit dem vom Sensor 17 kommenden Lenkwinkelsignal und zwei Schalteinheiten 21, 22 aufweist, die die Betätigung des automatischen Lenkgetriebes zur Verstellung des Lenkwinkels veranlassen.

Es kommt für das Prinzip nicht darauf an, ob der Speicher für das Spannseil am Fahrzeug oder am Ziel angeordnet ist. Zweckmäßiger ist häufig die Anordnung am Fahrzeug, weshalb auf diese Alternative in der folgenden Beschreibung Bezug genommen wird.

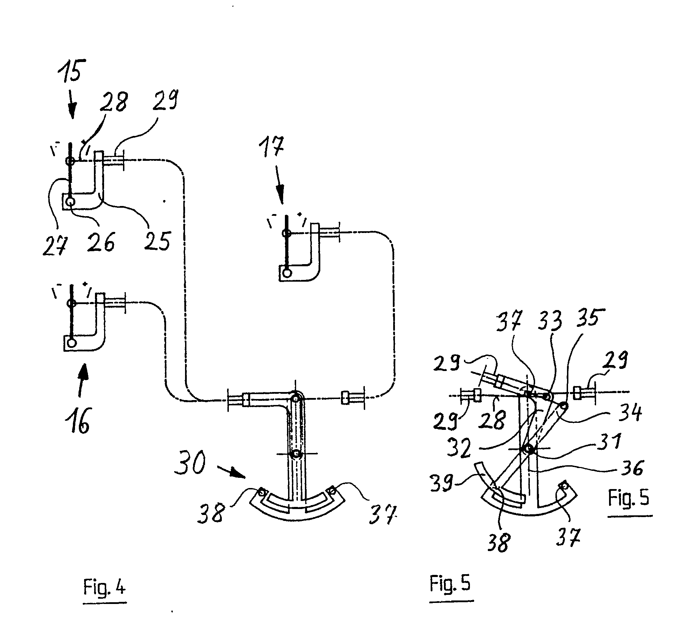

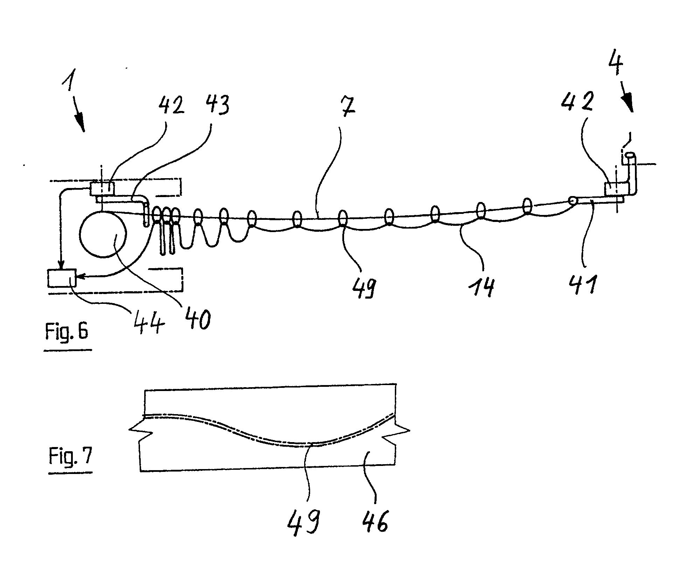

Eine mechanische Ausführung der Regeleinheit ist in Fig. 4 und 5 dargestellt. Drei Winkelsensoren 15, 16, 17 bestehen aus einem stationären, winkelförmigen Teil 25 und einem daran bei 26 winkelbeweglich angelenkten Meßhebel 27, auf den der zu messende Winkel übertragen wird und der nachher im Sinne der Pfeile "+" und "-" ausgelenkt werden kann. Mit dem Meßhebel 27 ist das Kabel 28 eines Bautenzugs 29 verbunden, dessen Mantel an dem stationären Teil 25 befestigt ist. Der Bautenzug 29 überträgt den Winkelwert zu einem Summieren 30. An einer stationären Achse 31 ist ein erster Hebel 32 befestigt, an dem bei 33 das Kabel 28 eines Bautenzugs 29 angreift, der von einem der Winkelsensoren 15, 16 kommt und dessen Mantel stationär verankert ist. Daher bildet die Lage des ersten Hebels 32 den Winkel des zugehörigen Sensors 15, 16 ab.

Um die stationäre Achse 31 ist ein zweiter Hebel 34 schwenkbar gelagert, an dessen Endpunkt 35 das Kabel eines zweiten Bautenzugs 29 von dem anderen der beiden Winkelsensoren 15, 16 angreift, wobei der Mantel dieses Bautenzugs an dem ersten Hebel 32 fest gelagert ist. Daher bildet die Relativstellung des zweiten Hebels 34 zum ersten Hebel 32 den Winkel des zugehörigen Winkelsensors 15, 16 ab, während die Lage des zweiten Hebels 34 gegenüber der ruhenden Umgebung die Summe der Winkel $\gamma$ und $\beta$ darstellt.

Ein dritter Hebel 36 ist gleichfalls um die stationäre Achse 31 schwenkbar, an dessen Ende bei 37 das Kabel desjenigen Bautenzugs angreift, der mit dem Winkelsensor 17 für den Lenkwinkel verbunden ist. Der Mantel dieses Bautenzugs ist stationär gelagert. Die Einstellung des Hebels 36 gegenüber der ruhenden Umgebung bildet daher den Lenkwinkel ab.

An dem umgekehrt T-förmigen dritten Hebel 36 sind an den Enden seines Stegs zwei Schalter 37, 38 angeordnet. Diese wirken zusammen mit dem Steg 39 des gleichfalls umgekehrt T-förmig ausgebildeten zweiten Hebels 34, der parallel liegt zu dem Steg des dritten Hebels 36, wobei seine Länge etwas geringer ist als der Abstand zwischen den Schaltern 37, 38.

Wenn die Summe der Winkel $\beta$ und $\gamma$ Null sind und auch der Lenkwinkel $\alpha$ Null ist, befinden sich sämtliche Hebel 32, 34, 36 in ihrer Neutralstellung Der Steg 39 des zweiten Hebels 34 liegt zwischen den Schaltern 37, 38, so daß keiner von ihnen betätigt ist. Dieser Zustand ist in Fig. 4 dargestellt.

Wenn aber diese Neutralbedingungen nicht eingehalten sind, betätigt der Steg 39 des zweiten Hebels 34 den einen oder anderen der Schalter 37, 38, wie dies in Fig. 5 dargestellt ist. Dies führt zur Betätigung des Lenkgetriebes, bis die Summe der Winkel $\beta$ und $\gamma$ dem negativen Lenkwinkel gleich ist.

Gemäß Fig. 6 ist zwischen dem Fahrzeug 1 und dem Ziel 4 das Spannseil 7 gespannt. Es wird durch eine Aufwickeleinrichtung 40 stets in straffem Zustand gehalten. Am Ziel 4 ist es in das Ende eines Nebels

4

41 eingehakt, der schwenkbar mit der Winkelmeßeinrichtung 42 verbunden ist. Er stellt sich stets auf die Richtung des Spannseils 7 ein und gibt seine Richtung als Winkelsignal an die Meßeinrichtung 42 weiter. Entsprechend ist am Fahrzeug eine Winkelmeßeinrichtung 42 angeordnet mit einem Abtasthebel 43, der eine Öse aufweist, durch die das Spannseil 7 geführt ist.

Nicht dargestellt ist eine Marke am Spannseil 7, die mit einem gleichfalls nicht dargestellten Sensor dann zusammenwirkt, wenn die maximale Entfernung zwischen Ziel und Fahrzeug und damit die Rangier-Ausgangsstellung erreicht ist und dann das Fahrzeug automatisch stoppt.

Für die Übermittlung des von der zielseitigen Winkelmeßeinrichtung 42 erzeugten Winkelsignals zur Regeleinheit 44 ist ein Übertragungskabel 14 vorgesehen, das für elektrische oder mechanische (Bautenzug) Übertragung eingerichtet sein kann. Ebenso wird das Signal der fahrzeugseitigen Winkelmeßeinrichtung 42 der Regeleinrichtung 44 zugeführt, wie dies durch Pfeile schematisch angedeutet ist. Wenn zur Signalübertragung ein besonderes, an Gleitstücken auf dem Spannseil 7 geführtes Kabel 49 benutzt wird, wie dies in Fig. 6 dargestellt ist, kann dies aufgrund farblicher Gestaltung des Kabels und/oder Gleitstücke eine Sichtblende bilden und dadurch den Raum hinter dem Fahrzeug gegen Querläufer deutlich absichern.

Stattdessen kann man ein Kabel 49 auch gemäß Fig. 7 in ein das Spannseil bildendes Gurtband 46 einweben.

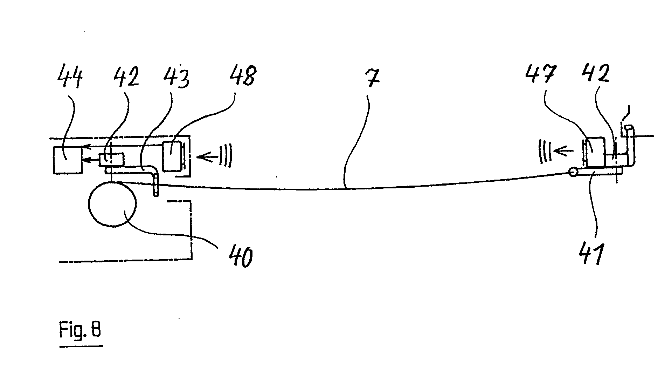

Die Ausführung gemäß Fig. 8 unterscheidet sich von derjenigen gemäß Fig. 6 lediglich dadurch, daß die Signalübermittlung von dem zielseitigen Winkelmeßgerät drahtlos über Sender 47 und Empfänger 48 unter Nutzung elektromagnetischer oder akustischer Wellen erfolgt, insbesondere mittels einer Proportional-Fernsteuerung.

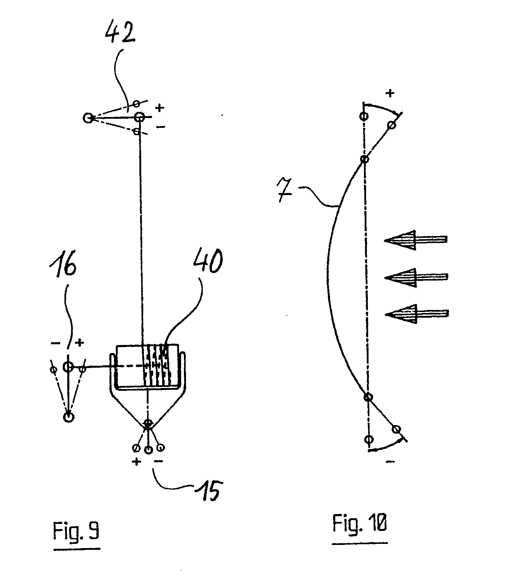

Während die Fig. 6 bis 8 die Anordnung in schematischer Seitenansicht zeigen, veranschaulicht Fig. 9 eine zugehörige Draufsicht, wobei die Winkelmeßeinrichtungen 42 schematisch so angedeutet sind, wie sie sich bei einer mechanischen Ausführung mit Bautenzügen etwa darstellen würden.

Durch Seitenwindeinfluß 50 kann das Spannseil 7 seitlich bogenförmig ausgelenkt werden, wodurch sich verfälschte Vorgabewerte für die Winkel $\beta$ und $\gamma$ ergeben. Jedoch können diese Fehlerabweichungen unberücksichtigt bleiben, da angenommen werden kann, daß die Winkelabweichungen an beiden Seilenden etwa gleich sind und sich daher bei der Vergleichsrechnung wieder aufheben, weil sie dort mit unterschiedlichem Vorzeichen eingehen.

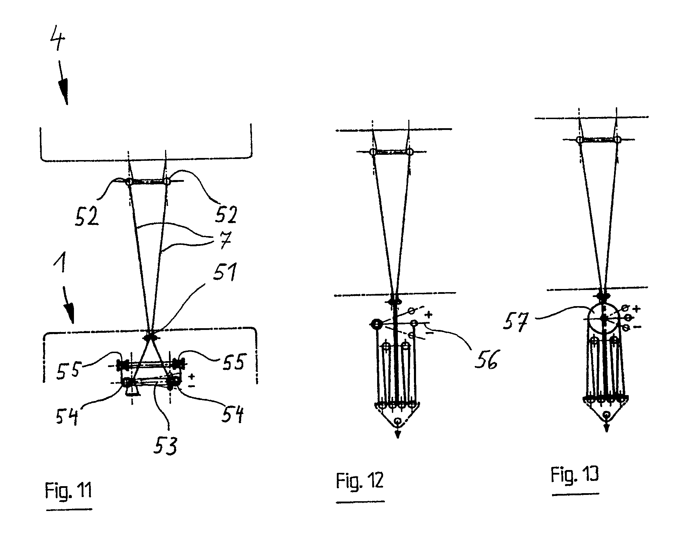

Gemäß Fig. 11 bis 14 vorausgesetzt, daß am Fahrzeug 1 zwei Spannseile 7 von demselben Punkt 51 ausgehen und am Ziel 4 in zwei seitlich zueinander versetzten Punkten 52 eingehakt sind. Wenn der Winkel $\gamma$ zwischen der Ziel-Fahrzeug-Verbindungslinie und der Zielpositionsrichtung von dem dargestellten Nullwert abweicht, ist die Distanz von dem Punkt 51 zu dem einen der beiden Punkte 52 größer als zu dem anderen. Diese Differenz kann am Fahrzeug 1 zwischen den Seilen abgetastet werden.

Dafür ist in der Ausführung gemäß Fig. 11 ein Waagebalken 53 vorgesehen, an dessen Enden Rollen 54 angeordnet sind, über die die Seile 7 zu drehfest miteinander verbundenen Trommeln 55 geführt sind. Der Waagebalken 53 ist durch Federkraft in Pfeilrichtung gedrängt und nimmt eine Winkelstellung ein, die der Längendifferenz der beiden Teile 7 entspricht und daher ein Maß für den zu messenden Winkel $\gamma$ ist.

In der Ausführung gemäß Fig. 12 sind die beiden Seile je über ein Flaschenzugsystem geführt und schließlich an den Enden eines Hebels 56 befestigt, der die Längendifferenz der Seile wiederum in einen Winkelwert umwandelt.

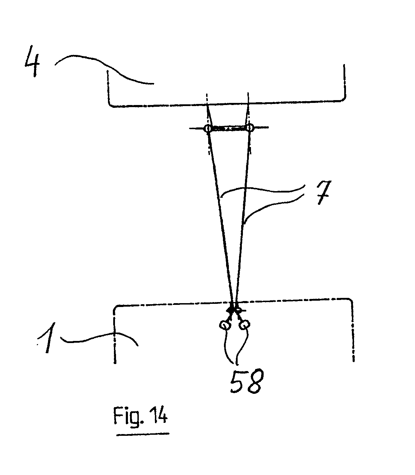

Die Ausführung gemäß Fig. 13 gleicht derjenigen gemäß Fig. 12 mit dem Unterschied, daß an die Stelle des Hebels 56 eine Rolle 57 tritt, über die die als ein durchlaufendes Seil ausgeführten Spannseile geführt sind. Der Drehwinkel der Rolle 57 repräsentiert den zu messenden Winkel.

Selbstverständlich kann mit den Winkelmeßorganen 53, 56 bzw. 57 ein Potentiometer oder ein anderer elektromechanischer Wandler verbunden sein, der ein entsprechend elektrisch auswertbares Signal erzeugt.

In der Ausführung gemäß Fig. 14 ist vorgesehen, daß am Fahrzeug 1 zwei separate Aufwickeleinrichtungen 58 vorgesehen sind, von denen jede mit einem Längenmeßsensor ausgerüstet ist, der die Länge des abgerollten Seils anzeigt. Stattdessen kann auch ein Längendifferenzsensor mit beiden Aufwickeleinrichtungen verbunden sein. Aus der Differenz kann der Winkel $\gamma$ abgeleitet werden.

Die Anordnung kann mit einer Ausklinkeinrichtung ausgerüstet sein, die das Spannseil dann ausklinkt, wenn das Fahrzeug die Zielstellung erreicht hat. Beispielsweise kann vorgesehen sein, daß beim Erreichen des Ziels das am Ziel eingehakte Seil entriegelt wird, wobei etwa oberhalb des Fahrgestells des Fahrzeugs befindliche Teile nach unten in den Fahrgestellbereich geklappt werden, so daß das Fahrzeug ohne Zwischenhalt beispielsweise unter einen Lastträger fahren kann.

## Ansprüche

1. Verfahren zum Rangieren, insbesondere Rückwärtsrangieren, eines lenkbaren Straßenfahrzeugs aus ungewisser Stellung in eine noch Ort und Richtung vorgegebene Zielposition, dadurch gekennzeichnet, daß ständig die Winkel ($\gamma$, $\beta$) zwischen der Ziel-Fahrzeug-Verbindungslinie und der Zielpositionsrichtung sowie der Fahrzeugslängsrichtung gemessen und danach ein geeigneter Lenkwinkel ($\alpha$) eingestellt wird.

2. Verfahren nach Anspruch 1, dadurch gekennzeichnet, daß der Lenkwinkel $\alpha$ nach der Formel $-\alpha = A \cdot \gamma + B \cdot \beta$ bestimmt wird.

3. Verfahren nach Anspruch 1 oder 2, dadurch gekennzeichnet, daß auch die Entfernung zwischen Zielposition und Fahrzeug gemessen wird.

4. Verfahren nach Anspruch 3, dadurch gekennzeichnet, daß die Entfernung nur am Beginn des Rangiervorgangs gemessen wird.

5. Verfahren nach Anspruch 3 oder 4, dadurch gekennzeichnet, daß eine Mindestrangierentfernung vorgegeben und deren Einhaltung gemessen wird.

6. Verfahren nach Anspruch 4 oder 5, dadurch gekennzeichnet, daß die Mindestrangierentfernung aus den jeweiligen Winkeldaten von Fall zu Fall bestimmt wird.

7. Verfahren nach einem der Ansprüche 1 bis 6, dadurch gekennzeichnet, daß die Winkel und ggf. die Entfernung mechanisch gemessen werden.

8. Verfahren nach einem der Ansprüche 1 bis 6, dadurch gekennzeichnet, daß die Winkel und die Entfernung unter Nutzung elektromagnetischer oder akustischer Wellen gemessen werden.

9. Anordnung zum Rangieren, insbesondere Rückwärtsrangieren, eines Straßenfahrzeugs aus ungewisser Stellung in eine noch Ort und Richtung vorgegebene Zielposition zur Durchführung des Verfahrens noch einem der Ansprüche 1 bis 8, dadurch gekennzeichnet, daß eine Einrichtung zum Feststellen der Winkel ($\gamma$, $\beta$) zwischen der Ziel-Fahrzeug-Verbindungslinie (7) und der Zielpositionsrichtung (9) sowie der Fahrzeugrichtung (8) vorgesehen ist und das Fahrzeug (1) mit einer den Lenkwinkel ($\alpha$) aus diesen Winkelwerten bestimmten Einrichtung (44) ausgerüstet ist.

10. Anordnung nach Anspruch 9, dadurch gekennzeichnet, daß der Lenkwinkel ($\alpha$) selbsttätig einstellbar ist.

11. Anordnung nach Anspruch 9 oder 10, dadurch gekennzeichnet, daß ein Spannseil (10) zwischen Ziel (4) und Fahrzeug (1), Einrichtung zur Winkelmessung an beiden Enden des Spannseils und eine Einrichtung zur Übermittlung des am Ziel gemessenen Winkelwerts zum Fahrzeug vorgesehen sind.

12. Anordnung nach Anspruch 9 oder 10, dadurch gekennzeichnet, daß zwei mit seitlichem Abstand am Ziel verankerte Seile vorgesehen sind und am Fahrzeug neben einer Einrichtung zum Messung des Winkels zwischen wenigstens einem Spannseil und der Fahrzeuglängsrichtung eine Einrichtung (53, 56, 57) zur Feststellung des Längsversatzes der Spannseile vorgesehen ist.

13. Anordnung nach einem der Ansprüche 9 bis 12, dadurch gekennzeichnet, daß eine Speichereinrichtung (58) für das Spannseil bzw. die Spannseile mit einer Entfernungsmeßeinrichtung ausgerüstet ist.

14. Anordnung nach Anspruch 9 oder 10, dadurch gekennzeichnet, daß das Fahrzeug 1 einen Empfänger für von dem Ziel ausgesandte Strahlung und eine Einrichtung zur Feststellung der Eingangsrichtung aufweist.

15. Anordnung nach Anspruch 14, dadurch gekennzeichnet, daß am Ziel zwei seitlich versetzte Sender und am Fahrzeug eine Einrichtung zur Feststellung des Laufstreckenunterschieds zwischen den von den Sendern ausgehenden Strahlungen vorgesehen sind.

16. Anordnung nach Anspruch 14 oder 15, dadurch gekennzeichnet, daß die vom Ziel ausgesandte Strahlung je nach Richtung unterschiedliche Eigenschaften aufweist.

17. Anordnung nach einem der Ansprüche 14 bis 16, dadurch gekennzeichnet, daß der am Ziel angeordnete Sender von einem Spiegel für vom Fahrzeug ausgehende Strahlung ausgebildet ist.

FIG. 1

FIG. 2

Fig. 3

Fig. 4

Fig. 5

Fig. 6

Fig. 7

44  42  43    48          7              47  42

40

41

Fig. 8

42

16          40

15

Fig. 9

7

Fig. 10

4

52            52
            7

1

51

55            55

54            54

53

Fig. 11

56

Fig. 12

57

Fig. 13

Fig. 14

Fig. 15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3340687 (LENHARD) <br> * Ansprüche 1-3; Figur * <br> --- | 1, 14-17 | G05D1/02 |
| Y | WO-A-8706899 (CUSTOM) <br> * Seite 4, Zeile 31 - Seite 5, Zeile 33; Figur 2 * <br> --- | 1, 3, 7, 9-11, 13 | |
| Y | PATENT ABSTRACTS OF JAPAN <br> vol. 11, no. 93 (P-559)(2540) 24 März 1987, <br> & JP-A-61 245213 (KAJIMA) 31 Oktober 1986, <br> * das ganze Dokument * <br> --- | 1, 3, 7, 9-11, 13 | |
| A | PATENT ABSTRACTS OF JAPAN <br> vol. 6, no. 145 (P-132)(1023) 4 August 1982, <br> & JP-A-57 064817 (MANABU OOHASHI) 20 April 1982, <br> * das ganze Dokument * <br> --- | 1-3 | |
| P,A | DE-A-3813083 (INDUSTRIAL TECHNOLOGY RESEARCH INSTITUTE) <br> * Zusammenfassung * <br> * Seite 5, Zeilen 16 - 29; Figur 6 * <br> ----- | 1, 3, 5, 8-10 | RECHERCHIERTE SACHGEBIETE (Int. Cl.5 ) <br><br> G05D <br> B62D |

Der vorliegende Recherchenbericht wurde für alle Patentansprüche erstellt

| Recherchenort | Abschlußdatum der Recherche | Prüfer |
|---|---|---|
| BERLIN | 29 OKTOBER 1990 | BROYDE, M |